# EUROPEAN PATENT APPLICATION

(11) **EP 2 675 235 A1**
(43) Date of publication of application: **18.12.2013**
(21) Application number: 11858459.8
(22) Date of filing: 12.02.2011
(51) Int. Cl.: H04W 72/12

(54) **METHOD AND DEVICE FOR ALLOCATING UPLINK CHANNEL RESOURCE OF COOPERATIVE MULTI-POINT TRANSMISSION/RECEPTION**

(71) Applicant: Fujitsu Limited, Kawasaki-shi, Kanagawa 211-8588 (JP)
(72) Inventor: LAN, Yuanrong, Beijing 100025 (CN); ZHANG, Yuantao, Beijing 100025 (CN); ZHANG, Yi, Beijing 100025 (CN); ZHOU, Hua, Beijing 100025 (CN); WU, Jianming, Beijing 100025 (CN)
(74) Representative: Schultes, Stephan
(86) International application number: PCT/CN2011/070958
(87) International publication number: WO 2012/106848

(57) **Abstract**

A method, device, system, User Equipment (UE), computer readable medium and programme product for allocating uplink channel resource of cooperative multi-point transmission/reception are disclosed. The method includes receiving involved information for allocating uplink control channel resource or uplink detection reference signal resource in at least one of other cells; according to the information for allocating the uplink control channel resource or the uplink detection reference signal resource in the involved main cell and at least one of other cells, determining the uplink channel resource which does not overlap the uplink control channel resource or the uplink channel resource allocated for an uplink communication in the main cell and at least one of other cells; and allocating the determined uplink channel resource for the uplink cooperative multi-point transmission/reception in the involved main cell and at least one of other cells.

## Description

### TECHNICAL FIELD

The present invention relates generally to the filed of wireless communication, and more particularly to a method and device for allocating uplink channel resources for cooperative multi-point transmission/reception.

### BACKGROUND ART

In a Long Term Evaluation System (LTE) of 3GPP, respective cells may use the same time domain resources and/or frequency domain resources (hereinafter referred to as "time frequency resources"), thus causing existence of interference among the respective cells to some extent. To improve the performance of the LTE system and the throughput and the transmission reliability of cell edge users, a technical solution called Cooperative Multi-point Transmission/Reception (CoMP) has been proposed. The CoMP solution reduces interference of neighboring cells by joint scheduling or coordinated transmission among a plurality of cells, so as to improve the quality of signals received by users, thereby effectively improving system capability and spectrum efficiency of edge users. According to differences in transmission solution, CoMP may be divided into the following two types: joint procession (JP) technology, and coordinated scheduling/coordinated beamforming (CS/CB) technology.

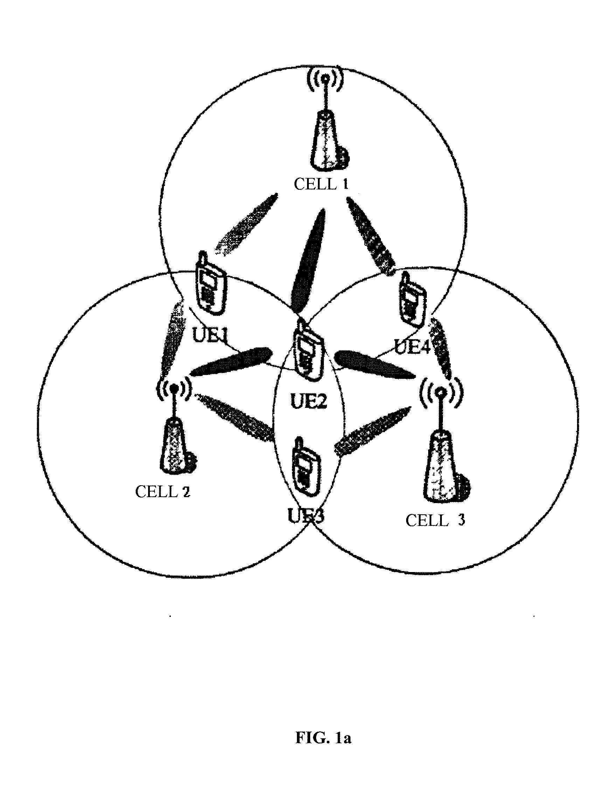

As shown in FIG. 1a, in the joint procession solution, all of cells in a cooperative cell set transmit the same or different data in the same wireless resource block to a terminal, that is, a plurality of cooperative cells transmit data to the same user terminal UE at the same moment. By means of the joint procession, original interference signals among different cells in the LTE system are changed to useful signals, thereby reducing interference among cells, so as to improve the quality of signals received by users.

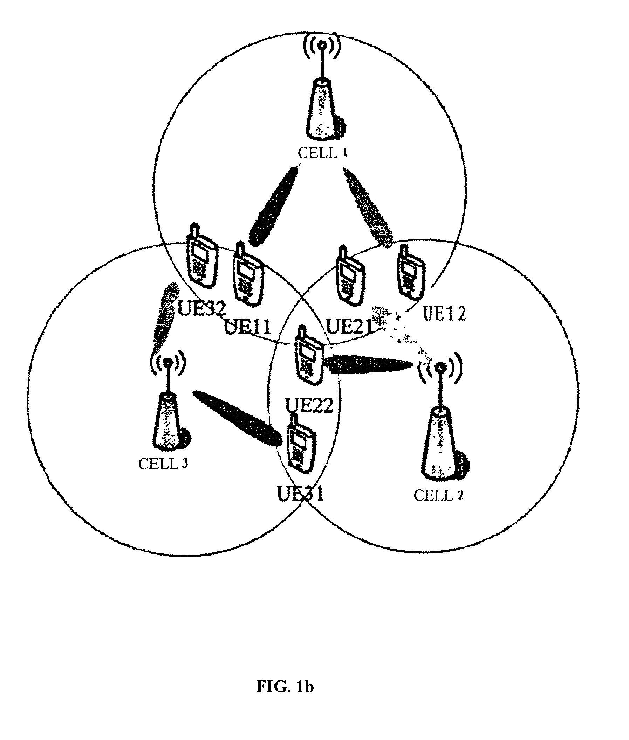

As shown in FIG. 1b, in the CS/CB technology, data of one user is simultaneously transmitted by only one cell, so as to control and reduce interference through coordinated scheduling of a plurality of cells. Other cells in the cooperative cell set can utilize the same wireless resources to serve different user terminals UEs, and transmission of signals by the respective cells in the cooperative cell set shall be coordinated according to interference for other cells, so as to reduce interference for user terminals of other cells as far as possible. Among the cooperative cells, by coordinating the direction of transmitting signal wave beams, wave beams having relatively great interference are effectively avoided. Therefore, by means of narrow wave beams, it is made possible to effectively reduce interference among cells, thereby improving the quality of received signals.

### SUMMARY OF THE INVENTION

Actually, in respective cells in an LTE system, uplink channel resources are possibly allocated in different manners from each other. For example, it is assumed that one main cell A and one other cell B exist, and that the two have the same uplink time frequency resources W₁, W₂, ..., W_{N-1}, W_{N}. It shall be noted that the time frequency resources W₁, W₂, ..., W_{N-1}, W_{N} may for example be Resource Blocks (RB) of subframes in a frequency domain or be Symbols of subframes in a time domain, etc. The main cell A possibly uses the uplink resources W₁ and W₂ for bearing other information except for user service data, such as uplink channel control information or sounding reference signal information and so on; besides, the main cell A possibly uses the remaining uplink resources W₃, ..., W_{N-1}, W_{N} for bearing user service data, for example data for carrying out CoMP. However, the other cell B possibly uses the uplink resources W₁, W₂ and W₃ for bearing other information except for user service data, such as uplink channel control information or sounding reference signal information and so on; besides, the other cell B possibly uses the remaining uplink resources W₄, ..., W_{N-1}, W_{N} for bearing user service data, for example data for carrying out CoMP. Therefore, the user service data which is bore by the uplink resource W₃ of the main cell A will be subjected to interference of the other information except for the user service data which is bore by the uplink resource W₃ of the other cell B.

The present invention shares among the respective cells allocation information of the uplink channel resources of the respective cells, and selects suitable uplink channel resources that can be used for carrying out CoMP operation while comprehensively taking into account the allocation information, thereby avoiding the above interference existing among the respective cells.

According to an embodiment of the present invention, a method for allocating uplink channel resources for cooperative multi-point transmission/reception in a base station is disclosed, comprising: receiving information relating to uplink control channel resources allocation or uplink sounding reference signal resources allocation in at least one other cell; determining uplink channel resources not overlapping with the uplink control channel resources or the uplink sounding reference signal resources that have been allocated for uplink communication in an main cell and the at least one other cell based on the information relating to the uplink control channel resources allocation or the uplink sounding reference signal resources allocation in the main cell and the at least one other cell; and allocating the determined uplink channel resources for uplink cooperative multi-point transmission/reception involving the main cell and the at least one other cell.

According to an embodiment of the present invention, the information relating to the uplink control channel resources allocation in the main cell and the at least one other cell is the number of resource blocks allocated to the uplink control channel in a subframe of the main cell and the at least one other cell, the uplink control channel resources that have been allocated for uplink communication in the main cell and the at least one other cell are resource blocks allocated to the uplink control channel in the subframe, and the determining step comprises: calculating a maximum number of resource blocks allocated to the uplink control channel in the subframe of the main cell and the at least one other cell; and determining other resource blocks except for the first maximum number of resource blocks and the last maximum number of resource blocks in the subframe as the uplink channel resources not overlapping.

According to an embodiment of the present invention, the information relating to the uplink sounding reference signal resources allocation in the main cell and the at least one other cell are sounding reference signal configuration parameters of the main cell and the at least one other cell, uplink sounding reference signal resources that have been allocated for uplink communication in the main cell and the at least one other cell are symbols for bearing sounding reference signal in the subframe, and the determining step comprises: determining subframes for carrying sounding reference signal and symbols for bearing sounding reference signal therein based on the sounding reference signal configuration parameters of the main cell and the at least one other cell; and determining other subframes except for the subframes for carrying sounding reference signal, and other symbols except for the symbols for bearing sounding reference signal in the subframes for carrying sounding reference signal as the uplink channel resources not overlapping.

According to an embodiment of the present invention, the sounding reference signal configuration parameters are sounding reference signal period and/or sounding reference signal bandwidth.

According to an embodiment of the present invention, if a base station to which the main cell belongs is different from a base station to which the at least one other cell belongs, the at least one other cell sends information relating to uplink control channel resources allocation or uplink sounding reference signal resources allocation in the at least one other cell to the base station to which the main cell belongs through X2 interface.

According to an embodiment of the present invention, an apparatus for allocating uplink channel resources for cooperative multi-point transmission/reception in a base station is disclosed, comprising: a receiving means for receiving information relating to uplink control channel resources allocation or uplink sounding reference signal resources allocation in at least one other cell; a determining means for determining uplink channel resources not overlapping with the uplink control channel resources or the uplink sounding reference signal resources that have been allocated for uplink communication in the main cell and the at least one other cell based on the information relating to the uplink control channel resources allocation or the uplink sounding reference signal resources allocation in the main cell and the at least one other cell; and an allocating means for allocating the determined uplink channel resources for uplink cooperative multi-point transmission/reception involving the main cell and the at least one other cell.

According to an embodiment of the present invention, a computer storage medium comprising computer readable instruction is disclosed, wherein the computer instruction is used to execute steps in the method according to preceding claims.

According to an embodiment of the present invention, a program product storing machine readable instruction codes is disclosed, wherein the instruction codes can perform the steps in the preceding methods when they are read and executed by the machine.

According to an embodiment of the present invention, a method for allocating uplink channel resources for cooperative multi-point transmission/reception is disclosed, comprising: a base station receives information relating to uplink control channel resources allocation or uplink sounding reference signal resources allocation in at least one other cell; the base station determines uplink channel resources not overlapping with the uplink control channel resources or the uplink sounding reference signal resources that have been allocated for uplink communication in an main cell and the at least one other cell based on the information relating to the uplink control channel resources allocation or the uplink sounding reference signal resources allocation in the main cell and the at least one other cell; the base station transmits allocation information of allocating the determined uplink channel resources for uplink cooperative multi-point transmission/reception involving the main cell and the at least one other cell to the user terminal; the user terminal receives the allocation information transmitted by the base station; and the user terminal accesses to the main cell and the at least one other cell according to the allocation information.

According to an embodiment of the present invention, a system for allocating uplink channel resources for cooperative multi-point transmission/reception, comprising a base station and a user terminal is disclosed, wherein, the base comprises: a receiving means for receiving information relating to uplink control channel resources allocation or uplink sounding reference signal resources allocation in at least one other cell; a determining means for determining uplink channel resources not overlapping with the uplink control channel resources or the uplink sounding reference signal resources that have been allocated for uplink communication in the main cell and the at least one other cell based on the information relating to the uplink control channel resources allocation or the uplink sounding reference signal resources allocation in the main cell and the at least one other cell; and a transmitting means for transmitting allocation information of allocating the determined uplink channel resources for uplink cooperative multi-point transmission/reception involving the main cell and the at least one other cell to the user terminal; the user terminal comprises: an allocation information receiving means for receiving the allocation information transmitted by the base station; and an accessing means for accessing to the main cell and the at least one other cell according to the allocation information.

According to an embodiment of the present invention, a method for allocating uplink channel resources for cooperative multi-point transmission/reception, comprising: a user terminal receives allocation information from a base station; and the user terminal accesses to an main cell and at least one other cell according to the allocation information; wherein, the base station receives information relating to uplink control channel resources allocation or uplink sounding reference signal resources allocation in at least one other cell; the base station determines uplink channel resources not overlapping with the uplink control channel resources or the uplink sounding reference signal resources that have been allocated for uplink communication in an main cell and the at least one other cell based on the information relating to the uplink control channel resources allocation or the uplink sounding reference signal resources allocation in the main cell and the at least one other cell; and the base station transmits allocation information of allocating the determined uplink channel resources for uplink cooperative multi-point transmission/reception involving the main cell and the at least one other cell to the user terminal.

According to an embodiment of the present invention, a user terminal for allocating uplink channel resources for cooperative multi-point transmission/reception is provided, comprising: an allocation information receiving means for receiving allocation information transmitted by a base station; and an accessing means for accessing to an main cell and at least one other cell according to the allocation information; wherein, the base station comprises: a receiving means for receiving information relating to uplink control channel resources allocation or uplink sounding reference signal resources allocation in at least one other cell; a determining means for determining uplink channel resources not overlapping with the uplink control channel resources or the uplink sounding reference signal resources that have been allocated for uplink communication in the main cell and the at least one other cell based on the information relating to the uplink control channel resources allocation or the uplink sounding reference signal resources allocation in the main cell and the at least one other cell; and a transmitting means for transmitting allocation information of allocating the determined uplink channel resources for uplink cooperative multi-point transmission/reception involving the main cell and the at least one other cell to the user terminal.

### BRIEF DECRIPTION OF THE DRAWINGS

These and other objects, features and advantages of the present invention will be understood more easily from the following descriptions of the embodiments of the present invention combined with the attached drawings. In the attached drawings, the same or corresponding technical features or components will be denoted by the same or corresponding reference signs.

FIG. 1a shows a schematic view of joint procession CoMP in the prior art;

FIG. 1b shows a schematic view of coordinated scheduling/coordinated beamforming CoMP in the prior art;

FIG. 2 shows a flow chart of a method for allocating uplink channel resources for cooperative multi-point transmission/reception in a base station according to a first embodiment of the present invention;

FIG. 3 shows a flow chart of a method for allocating uplink channel resources for cooperative multi-point transmission/reception according to uplink control channel information in a base station according to a second embodiment of the present invention;

FIG. 4a shows subframe structures of respective cells according to the second embodiment of the present invention;

FIG. 4b shows regions in subframes of the respective cells which can be selected for carrying out CoMP according to the second embodiment of the present invention;

FIG. 5 shows a flow chart of a method for allocating uplink channel resources for cooperative multi-point transmission/reception according to sounding sound signal information in a base station according to a third embodiment of the present invention;

FIG. 6a shows frame sequences of respective cells which have different sounding reference signal periods according to the third embodiment of the present invention;

FIG. 6b shows structures of the nth subframes of the respective cells according to the third embodiment of the present invention;

FIG. 6c shows regions in subframes of the respective cells which can be selected for carrying out CoMP according to the third embodiment of the present invention;

FIG. 7 shows a schematic block diagram of an apparatus for allocating uplink channel resources for cooperative multi-point transmission/reception in a base station according to a fourth embodiment of the present invention;

FIG. 8 shows a schematic block diagram of an apparatus for allocating uplink channel resources for cooperative multi-point transmission/reception according to uplink control channel information in a base station according to a fifth embodiment of the present invention;

FIG. 9 shows a schematic block diagram of an apparatus for allocating uplink channel resources for cooperative multi-point transmission/reception according to sounding reference signal information in a base station according to a sixth embodiment of the present invention;

FIG. 10 shows a flow chart of a method for allocating uplink channel resources for cooperative multi-point transmission/reception according to a seventh embodiment of the present invention;

FIG. 11 shows a flow chart of a method for allocating uplink channel resources for cooperative multi-point transmission/reception according to an eighth embodiment of the present invention;

FIG. 12 shows a schematic block diagram of a user terminal according to the present invention.

### DETAILED DESCRIPTION OF EMBODIMENTS

Hereinafter, embodiments of the present invention will be described with reference to the attached drawings. It should be noted that, for the purpose of clarity, representations and descriptions of components and processing known to those ordinarily skilled in the art which are irrelevant to the present invention are omitted in the attached drawings and descriptions thereof.

### First Embodiment

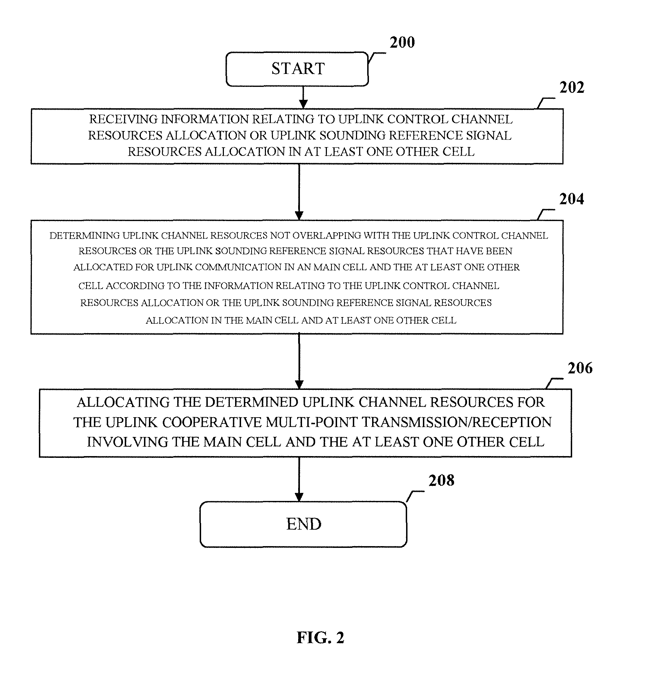

Hereinafter, a first embodiment of the present invention will be described in combination with FIG. 2. Referring to FIG. 2, FIG. 2 shows a flow chart of a method for allocating uplink channel resources for cooperative multi-point transmission/reception in a base station according to the first embodiment of the present invention.

The method starts from step 200. In step 202, information relating to uplink control channel resources allocation or uplink sounding reference signal resources allocation in at least one other cell is received.

Before carrying out CoMP in an main cell and the other cells, the main cell can first send a request for resource configuration information to other cells. Upon receipt of the request sent by the main cell, the other cells send the resource configuration information thereof to the main cell. The resource configuration information of the other cells for example is information relating to uplink control channel resources allocation of the other cells, or is information relating to uplink sounding reference signal resources allocation of the other cells. The information relating to uplink control channel resources allocation of the other cells for example is allocating how many resource blocks or which resource blocks in a subframe for an uplink control channel. The information relating to uplink sounding reference signal resources allocation of the other cells for example is a sounding signal configuration parameter, such as sounding reference signal period or sounding reference signal bandwidth and so on. The sounding reference signal is a signal sent periodically or non-periodically by the UE on an uplink channel in order to detect the quality of the uplink channel. Those skilled in the art would appreciate that the resource configuration information of the other cells may also be cell-specific information of other types. Because of differences in configuration manners of the respective cells, inter-cell interference exists among the respective cells to some extent.

In addition, it is also possible that the resource configuration information of the other cells is sent periodically or non-periodically by the other cells to the main cell on its own initiative, without sending a request for resource configuration information from the main cell to the other cells. Although in the present embodiment only one other cell is shown in cooperative multi-point transmission/reception, the number of the other cells may be more than one, for example two or more than two.

Next, in step 204, uplink channel resources not overlapping with the uplink control channel resources or the uplink sounding reference signal resources that have been allocated for uplink communication in an main cell and the at least one other cell is determined based on the information relating to the uplink control channel resources allocation or the uplink sounding reference signal resources allocation in the main cell and the at least one other cell.

Descriptions are made still by way of the above example. It shall be noted that the time frequency resources W₁, W₂, ..., W_{N-1}, W_{N} may for example be Resource Blocks (RB) of subframes in a frequency domain or be Symbols of subframes in a time domain, etc. The main cell A possibly uses the uplink time frequency resources W₁ and W₂ for bearing other information except for user service data, such as uplink channel control information or sounding reference signal information and so on. However, the other cell B possibly uses the uplink time frequency resources W₁, W₂ and W₃ for bearing other information except for user service data, such as uplink channel control information or sounding reference signal information and so on. While comprehensively taking into account the resource configuration conditions of the main cell A and the other cell B, it is determined that the uplink time frequency resources W₄, ..., W_{N-1}, W_{N} are uplink time frequency resources not overlapping with the uplink time frequency resources W₁ and W₂ of the main cell A and not overlapping with the uplink time frequency resources W₁, W₂ and W₃ of the other cell.

Next, in step 206, the determined uplink channel resources are allocated for uplink cooperative multi-point transmission/reception involving the main cell and the at least one other cell.

Turning to the above example again, since it is already determined that the uplink time frequency resources W₄, ..., W_{N-1}, W_{N} are uplink time frequency resources not overlapping with the uplink time frequency resources W₁ and W₂ of the main cell A and not overlapping with the uplink time frequency resources W₁, W₂ and W₃ of the other cell, the uplink time frequency resources W₄, ..., W_{N-1}, W_{N} are allocated for bearing data for carrying out CoMP operation.

Finally, the method ends at step 208.

The present embodiment shares among the respective cells allocation information of uplink control channel resources or uplink sounding reference signal resources of the respective cells, and comprehensively takes into account the allocation information to select uplink channel resources not overlapping with the uplink control channel resources or the uplink sounding reference signal resources that have been allocated for uplink communication in the main cell and the at least one other cell, thereby avoiding the interference existing among the respective cells.

### Second Embodiment

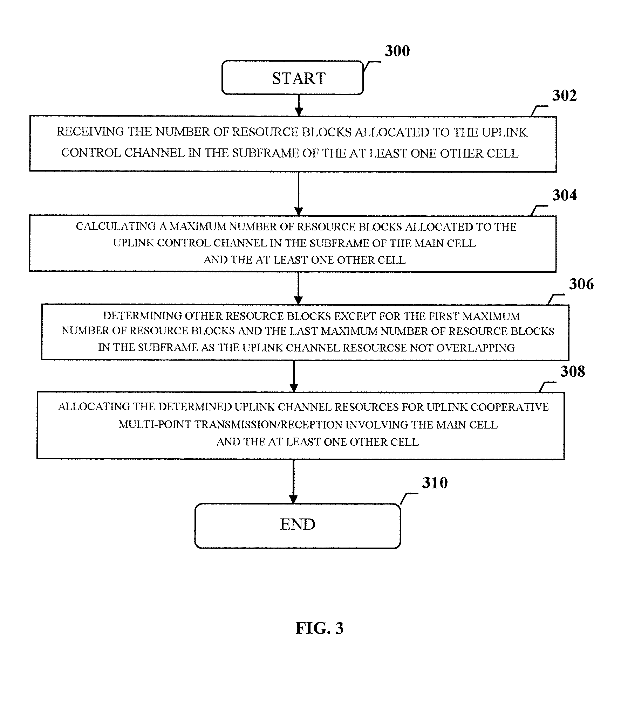

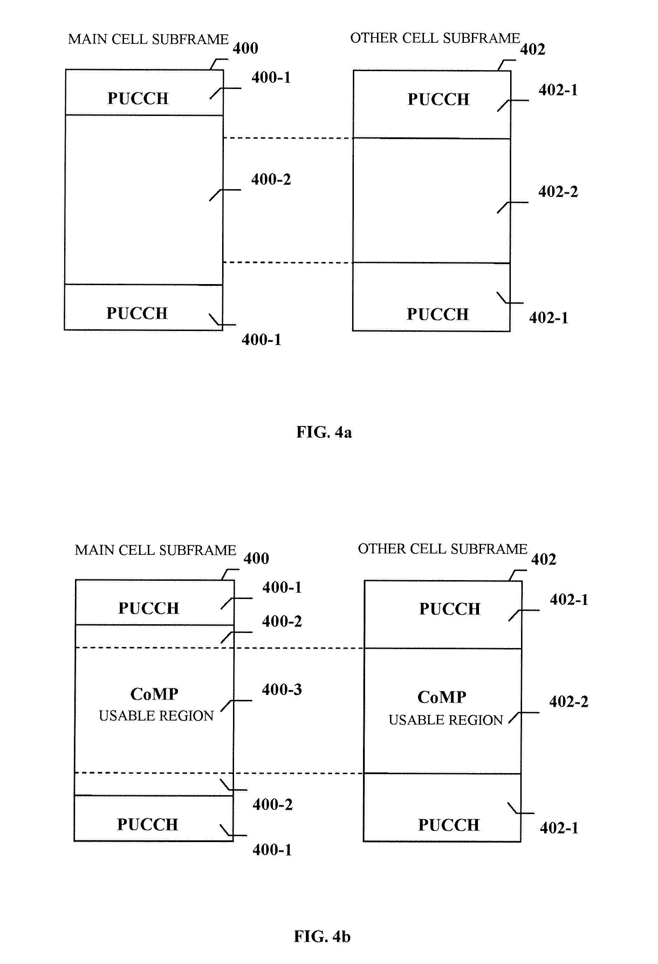

Hereinafter, a second embodiment of the present invention will be described in combination with FIG. 3 and FIGS. 4a and 4b. FIG. 3 shows a flow chart of a method for allocating uplink channel resources for cooperative multi-point transmission/reception according to uplink control channel information in a base station according to the second embodiment of the present invention. FIG. 4a shows subframe structures of respective cells according to the second embodiment of the present invention. FIG. 4b shows regions in subframes of the respective cells which can be selected for carrying out CoMP according to the second embodiment of the present invention.

Referring to FIGS. 4a and 4b, an main cell subframe 400 comprises uplink control channels (PUCCH) 400-1 which are located at a head of the subframe and a tail of the subframe respectively, and further comprises a usable region 400-2 located at a middle portion of the subframe. Similarly, an other cell subframe 402 comprises uplink control channels (PUCCH) 402-1 which are located at a head of the subframe and a tail of the subframe respectively, and further comprises a usable region 402-2 located at a middle portion of the subframe. The total number of resource blocks included in the main cell subframe 400 is equal to the total number of resource blocks included in the other cell subframe 402, but the number n₁ of resource blocks included in the uplink control channels 400-1 in the main cell subframe 400 possibly differs from the number n₂ of resource blocks included in the uplink control channels 402-1 in the other cell subframe 402. Both n₁ and n₂ are natural numbers greater than or equal to 1. In the embodiment as shown in FIG. 4a, n₁ is less than n₂. However, those skilled in the art would appreciate that n₁ is also possibly greater than n₂. Although in the present embodiment only one other cell subframe 402 is shown, the number of the other cell may be more than one, for example two or more than two.

Referring to FIG. 3, the method starts from step 300. Next, in step 302, the number of resource blocks allocated to the uplink control channel in a subframe of the at least one other cell is received.

Referring to FIG. 4a, before carrying out CoMP in the main cell and the other cells, the main cell can first send to the other cells a request for the number n₂ of resource blocks allocated to the uplink control channel 402-1 in the subframe 402 of the other cellmainmain. Upon receipt of the request sent by the main cell, the other cells send the number n₂ to the main cell. In addition, it is also possible that the number n₂ is sent periodically or non-periodically by the other cells to the main cell on its own initiative, without sending a request for the number n₂ from the main cell to the other cells. Those skilled in the art would appreciate that what is received from the other cells may also be cell-specific information of other types.

Next, in step 304, a maximum number of resource blocks allocated to the uplink control channel in the subframes of the main cell and the at least one other cell is calculated.

Referring to FIG. 4a, the number of resource blocks allocated to the uplink control channels 400-1 in the main cell subframe 400 is n₁, and the number of resource blocks allocated to the uplink control channels 402-1 in the mainother cell subframe 402 is n₂. A maximum number of n₁ and n₂ is calculated. In the example as shown in FIG. 4a, n₁ is less than n₂, so the maximum number of n₁ and n₂ is n₂. Those skilled in the art would appreciate that the number of the other cell may be more than one, and correspondingly more than one value of n₂ exists.

Next, in step 306, other resource blocks except for the first maximum number of resource blocks and the last maximum number of resource blocks in the subframe are determined as the uplink channel resources not overlapping.

Referring to FIG. 4b, after it is calculated that the maximum number of n₁ and n₂ is n₂, other resource blocks except for the first n₂ resource blocks and the last n₂ resource blocks in the main cell subframe 400 are determined as the uplink channel resources not overlapping, i.e., a CoMP usable region 400-3. Similarly, other resource blocks except for the first n₂ resource blocks and the last n₂ resource blocks in the other cell subframe 402 are determined as the uplink channel resources not overlapping, i.e., a CoMP usable region 402-2. Those skilled in the art would appreciate that the number of the other cell may be more than one. All of other processing methods are similar thereto, and will not be repeatedly described herein.

In addition, n₁ is also possibly greater than n₂, so it is calculated that the maximum number of n₁ and n₂ is n₁. In this case, the resource blocks except for the first n₁ resource blocks and the last n₁ resource blocks in the main cell subframe 400 are determined as the uplink channel resources not overlapping, and other resource blocks except for the first n₁ resource blocks and the last n₁ resource blocks in the other cell subframe 402 are determined as the uplink channel resources not overlapping.

Next, in step 308, the determined uplink channel resources are allocated for uplink cooperative multi-point transmission/reception involving the main cell and the at least one other cell.

Finally, the method ends at step 310.

Generally speaking, in a subframe in the same cell, the number h of resource blocks occupied by an uplink control channel located at a head thereof is equal to the number t of resource blocks occupied by an uplink control channel located at a tail thereof, wherein both h and t are integers greater than or equal to 1. However, those skilled in the art would appreciate that the number of h and the number t may also be unequal to each other. For example, in a carrier aggregation system, because of existence of uplink control channel format 3, the number h is possibly greater than the number t.

When the number h is different from the number t, the number of resource blocks allocated to the uplink control channel in a subframe of the at least one other cell which is received in the step 302 may include for example the numbers of resource blocks allocated to the uplink control channels located at the head and the tail thereof respectively in a subframe of the at least one other cell, that is, the step 302 specifically may be receiving the number of resource blocks allocated to the uplink control channel located at the head thereof in a subframe of the at least one other cell, and the number of resource blocks allocated to the uplink control channel located at the tail thereof in the subframe of the at least one other cell; what is calculated in step 304 for example is a maximum number of resource blocks allocated to the uplink control channels located at the head and the tail thereof respectively in subframes of the main cell and the at least one other cell, that is, the step 304 specifically may be calculating a maximum number of resource blocks allocated to the uplink control channels located at the head thereof in the subframes of the main cell and the at least one other cell, and resource blocks allocated to the uplink control channels located at the tail thereof in the subframes of the main cell and the at least one other cell. The remaining steps are the same as those described in the above embodiment, and will not be repeatedly described herein.

The present embodiment shares among the respective cells the numbers of resource blocks allocated to the uplink control channels in the subframes of the respective cells, calculates a maximum number of the numbers, and selects other resource blocks except for the first maximum number of resource blocks and the last maximum number of resource blocks in the subframes as CoMP usable resource blocks, thereby avoiding interference among the respective cells which is caused by the uplink control channels.

### Third Embodiment

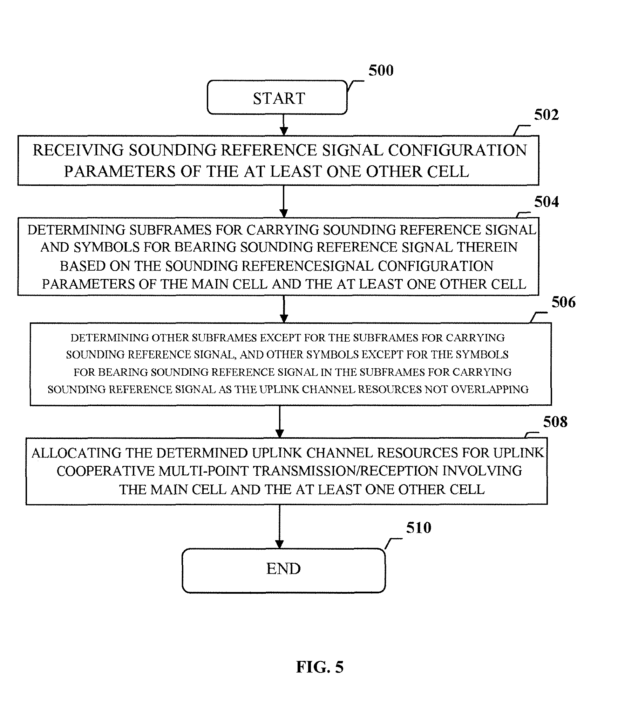

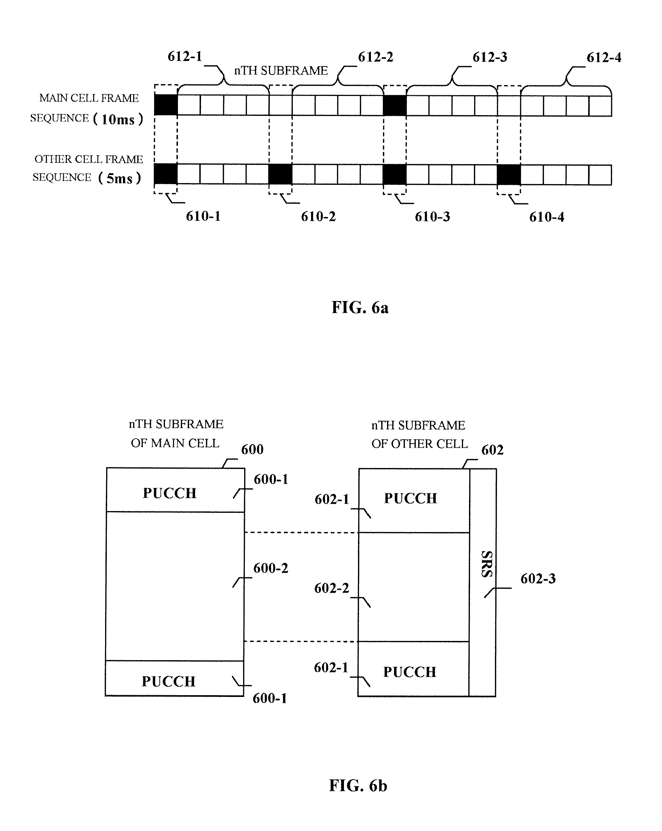

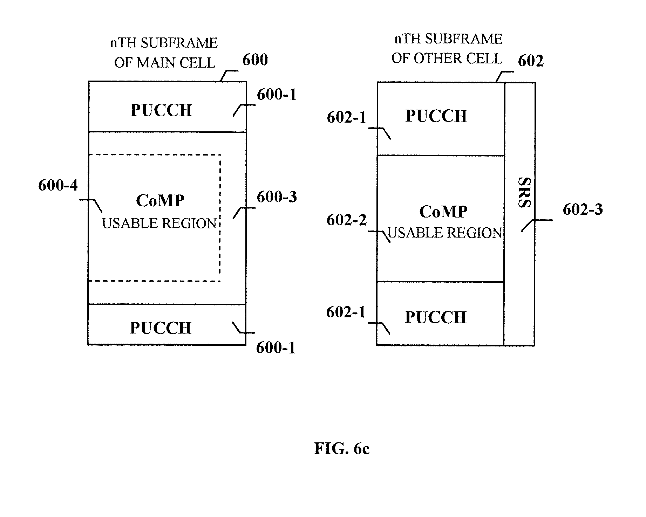

Hereinafter, a third embodiment of the present invention will be described in combination with FIG. 5 and FIGS. 6a, 6b and 6c. FIG. 5 shows a flow chart of a method for allocating uplink channel resources for cooperative multi-point transmission/reception according to sounding sound signal information in a base station according to the third embodiment of the present invention. FIG. 6a shows frame sequences of respective cells which have different sounding reference signal periods according to the third embodiment of the present invention. FIG. 6b shows structures of the nth subframes of the respective cells according to the third embodiment of the present invention. FIG. 6c shows regions in subframes in the respective cells which can be selected for carrying out CoMP according to the third embodiment of the present invention.

Referring to FIG. 6a, configuration parameters of sounding reference signals in the respective cells are possibly different from each other. For example, in the example as shown in FIG. 6a, the period of the sounding reference signal of the main cell is 10 ms, and the period of the sounding reference signal in the other cell is 5 ms. That is, in the frame sequence of the main cell, a subframe for bearing sounding reference signal exists every 10 subframes; and in the frame sequence of the other cell, a subframe for bearing detection control signal exists every 5 subframes. Therefore, as shown in FIG. 6b, the nth subframe in the frame sequence of the main cell is not allocated for bearing sounding reference signal, while the nth subframe in the frame sequence of the other cell is allocated for bearing a sounding reference signal.

As shown in FIG. 6b, the nth subframe 600 in the frame sequence of the main cell comprises uplink control channels (PUCCH) 600-1 which are located at a head of the subframe and a tail of the subframe respectively, and further comprises a usable region 600-2 located at a middle portion of the subframe. The nth subframe 602 in the frame sequence of the other cell comprises uplink control channels (PUCCH) 602-1 which are located at a head of the subframe and a tail of the subframe respectively, and further comprises a usable region 602-2 located at a middle portion of the subframe. As shown in FIG. 6b, the nth subframe 602 in the frame sequence of the other cell further comprises a last symbol 602-3 for bearing sounding reference signal in the subframe. The last code word 602-3 covers all of resource blocks (i.e., bandwidths) in the subframe. Those skilled in the art would appreciate that code words at other positions in the subframe can also be used for bearing sounding reference signal, and that the number of the code words for bearing sounding reference signal may be more than one.

Referring to FIG. 5, the method starts from step 500. Next, in step 502, the sounding reference signal configuration parameter of the at least one other cell is received.

Referring to FIGS. 6a and 6b, before carrying out CoMP in the main cell and the other cell, the main cell can first send to the other cells a request for the sounding reference signal configuration parameter of the other cell. Upon receipt of the request sent by the main cells, the other cells send the sounding reference signal configuration parameter of the other cells to the main cell. In addition, it is also possible that the sounding reference signal configuration parameter of the other cells is sent periodically or non-periodically by the other cells to the main cell on its own initiative, without sending a request for the sounding reference signal configuration parameter of the other cells from the main cell to the other cells. The sounding reference signal configuration parameters for example may be sounding reference signal period and/or sounding reference signal bandwidth. Those skilled in the art would appreciate that what is received from the other cells may also be cell-specific information of other types.

Next, in step 504, subframes for carrying sounding reference signal and symbols for bearing sounding reference signal therein are determined based on the sounding reference signal configuration parameters of the main cell and the at least one other cell.

As shown in FIG. 6a, subframes having frame serial numbers 610-1, 610-2, 610-3 and 610-4 corresponding to subframes in the frame sequences of the main cell or all the other cells which are marked as being black (which are subframes for bearing sounding reference signals in the respective cells) are determined as being subframes for bearing sounding reference signal based on the sounding reference signal configuration parameters (for example sounding reference signal period) of the main cell and the other cell. As shown in FIG. 6b, the last symbol 602-3 in the subframe which is determined as being used for bearing sounding reference signal is determined as specifically being a symbol for bearing sounding reference signal. Those skilled in the art would appreciate that the symbol for bearing sounding reference signal is not limited to the last symbol in the subframe but may also be other symbols in the subframe.

Next, in step 506, other subframes except for the subframes for carrying sounding reference signal, and other symbols except for the symbols for bearing sounding reference signal in the subframes for carrying sounding reference signal are determined as the uplink channel resources not overlapping.

As shown in FIG. 6a, subframes having frame serial numbers 612-1, 612-2, 612-3 and 612-4 corresponding to subframes in the frame sequences of the main cell and all the other cells which each are not marked as being black (which are subframes for bearing sounding reference signals in the respective cells) are determined as the uplink channel resources not overlapping. Meanwhile, as shown in FIG. 6c, for subframes having frame serial numbers 610-1, 610-2, 610-3 and 610-4 corresponding to subframes in the frame sequences of the main cell or all the other cells which are marked as being black (which are subframes for bearing sounding reference signals in the respective cells), other symbols except for the last symbol 602-3 are determined as the uplink channel resources not overlapping, i.e., CoMP usable regions 600-4 and 602-2.

Next, in step 508, the determined uplink channel resources are allocated for uplink cooperative multi-point transmission/reception involving the main cell and the at least one other cell.

Finally, the method ends at step 510.

The present embodiment shares among the respective cells sounding reference signal configuration parameters of the respective cells, determines subframes for carrying sounding reference signal and symbols for bearing sounding reference signal therein, and selects other subframes except for the subframes for carrying sounding reference signal, and other symbols except for the symbols for bearing sounding reference signal in the subframes for carrying sounding reference signal as CoMP usable subframes or symbols, thereby avoiding interference among the respective cells which is caused by the sounding reference signals.

### Fourth Embodiment

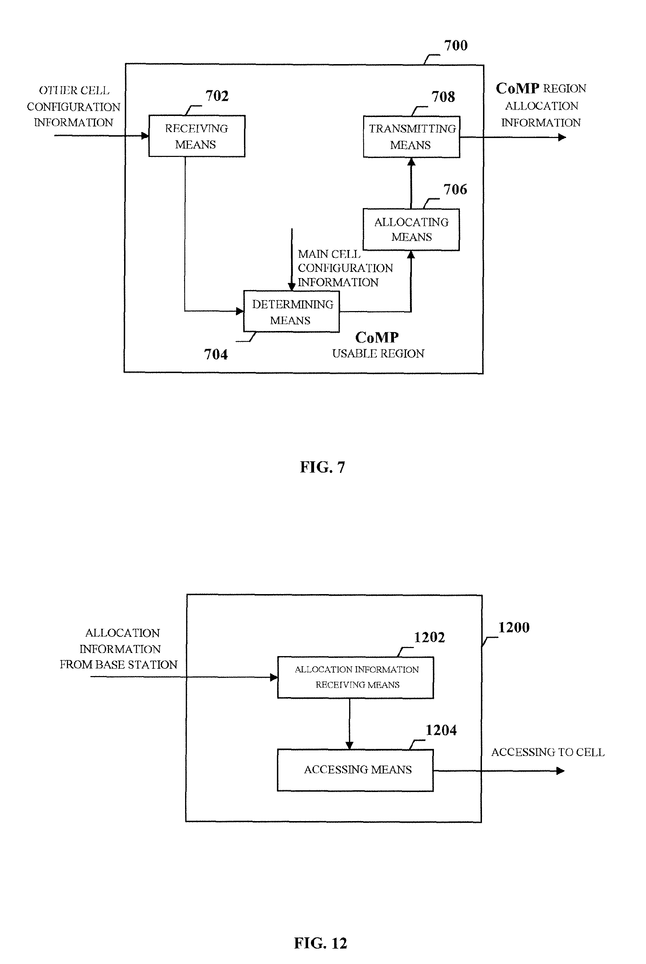

Hereinafter, a fourth embodiment of the present invention will be described in combination with FIG. 7. FIG. 7 shows a schematic block diagram of an apparatus for allocating uplink channel resources for cooperative multi-point transmission/reception in a base station according to the fourth embodiment of the present invention.

As shown in FIG. 7, the apparatus 700 comprises a receiving means 702, a determining means 704, an allocating means 706 and a transmitting means 708. The receiving means 702 is used for receiving information relating to uplink control channel resources allocation or uplink sounding reference signal resources allocation in at least one other cell. The determining means 704 is used for determining uplink channel resources not overlapping with the uplink control channel resources or the uplink sounding reference signal resources that have been allocated for uplink communication in the main cell and the at least one other cell based on the information relating to the uplink control channel resources allocation or the uplink sounding reference signal resources allocation in the main cell and the at least one other cell. The allocating means 706 is used for allocating the determined uplink channel resources for uplink cooperative multi-point transmission/reception involving the main cell and the at least one other cell. The transmitting means 708 is used for transmitting allocation information to a user terminal, wherein the allocation information for example is information of allocating the determined uplink channel resources for uplink cooperative multi-point transmission/reception involving the main cell and the at least one other cell (that is, is CoMP region allocation information).

The apparatus 700 according to the fourth embodiment of the present invention is an apparatus corresponding to the method according to the first embodiment of the present invention, so it will not be repeatedly described in detail herein.

### Fifth Embodiment

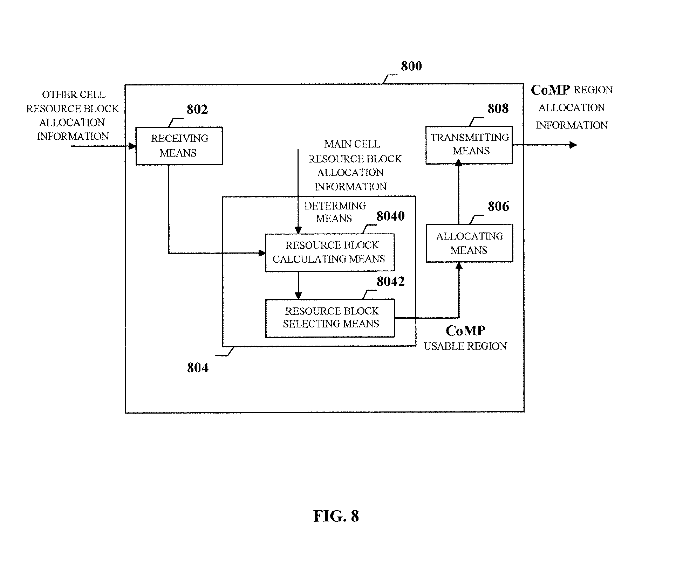

Hereinafter, a fifth embodiment of the present invention will be described in combination with FIG. 8. FIG. 8 shows a schematic block diagram of an apparatus for allocating uplink channel resources for cooperative multi-point transmission/reception according to uplink control channel information in a base station according to the fifth embodiment of the present invention.

As shown in FIG. 8, the apparatus 800 comprises a receiving means 802, a determining means 804, an allocating means 806 and a transmitting means 808, wherein the determining means 804 comprises a resource block calculating means 8040 and a resource block selecting means 8042. The receiving means 802 is used for receiving the number of resource blocks allocated to the uplink control channel in a subframe of the at least one other cell. The resource block calculating means 8040 is used for calculating a maximum number of resource blocks allocated to the uplink control channel in the subframes of the main cell and the at least one other cell. The resource block selecting means 8042 is used for determining other resource blocks except for the first maximum number of resource blocks and the last maximum number of resource blocks as the uplink channel resources not overlapping. The allocating means 806 is used for allocating the determined uplink channel resources for uplink cooperative multi-point transmission/reception involving the main cell and the at least one other cell. The transmitting means 808 is used for transmitting allocation information to a user terminal, wherein the allocation information for example is information of allocating the determined uplink channel resources for uplink cooperative multi-point transmission/reception involving the main cell and the at least one other cell (that is, is CoMP region allocation information).

The apparatus 800 according to the fifth embodiment of the present invention is an apparatus corresponding to the method according to the second embodiment of the present invention, so it will not be repeatedly described in detail herein.

### Sixth Embodiment

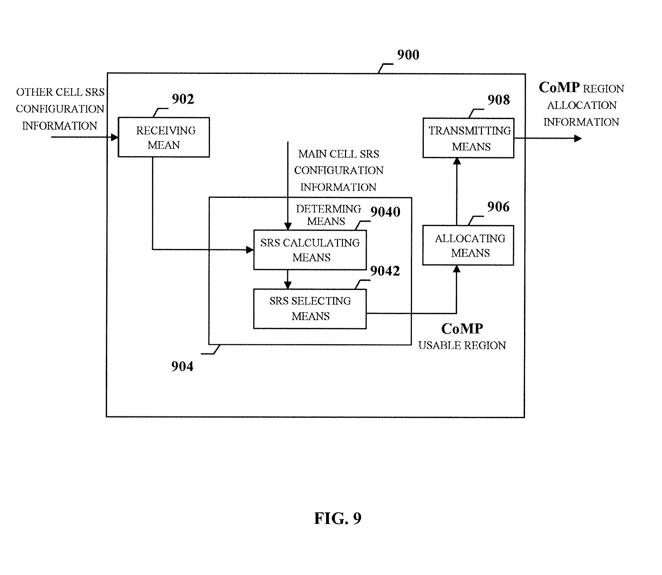

Hereinafter, a sixth embodiment of the present invention will be described in combination with FIG. 9. FIG. 9 shows a schematic block diagram of an apparatus for allocating uplink channel resources for cooperative multi-point transmission/reception according to sounding reference signal information in a base station according to the sixth embodiment of the present invention.

As shown in FIG. 9, the apparatus 900 comprises a receiving means 902, a determining means 904, an allocating means 906 and a transmitting means 908, wherein the determining means 904 comprises a resource block calculating means 9040 and a resource block selecting means 9042. The receiving means 902 is used for receiving the sounding reference signal configuration parameter of the at least one other cell. The resource block calculating means 9040 is used for determining subframes for carrying sounding reference signal and symbols for bearing sounding reference signal therein based on the sounding reference signal configuration parameters of the main cell and the at least one other cell. The resource block selecting means 9042 is used for determining other subframes except for the subframes for carrying sounding reference signal, and other symbols except for the symbols for bearing sounding reference signal in the subframe for carrying sounding reference signal as the uplink channel resources not overlapping. The allocating means 906 is used for allocating the determined uplink channel resources for uplink cooperative multi-point transmission/reception involving said main cell and said at least one other cell. The transmitting means 908 is used for transmitting allocation information to a user terminal, wherein the allocation information for example is information of allocating the determined uplink channel resources for uplink cooperative multi-point transmission/reception involving the main cell and the at least one other cell (that is, is CoMP region allocation information).

The apparatus 800 according to the sixth embodiment of the present invention is an apparatus corresponding to the method according to the third embodiment of the present invention, so it will not be repeatedly described in detail herein.

### Seventh Embodiment

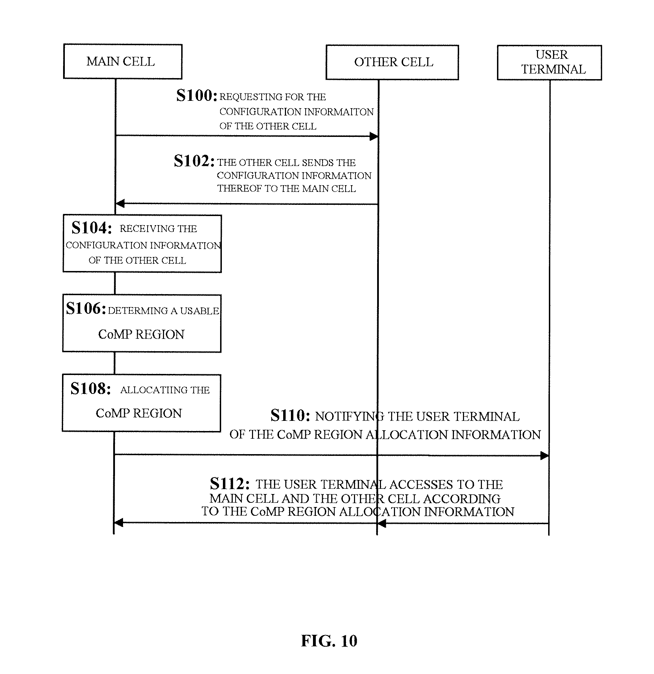

Hereinafter, a seventh embodiment of the present invention will be described in combination with FIG. 10. FIG. 10 shows a flow chart of a method for allocating uplink channel resources for cooperative multi-point transmission/reception in a base station according to the seventh embodiment of the present invention.

As shown in FIG. 10, in step S100, a base station to which the main cell belongs sends a request for resource configuration information to a base station to which the at least one other cell belongs, wherein the resource configuration information for example may be information relating to uplink control channel resources or uplink sounding reference signal resources allocation. Next, in step S102, upon receipt of the request sent by the base station to which the main cell belongs, the base station to which the at least one other cell belongs sends resource configuration information of the at least one other cell to the base station to which the main cell belongs. Next, in step S104, the base station to which the main cell belongs receives the resource configuration information of the at least one other cell. Next, in step S 106, the base station to which the main cell belongs determines a usable CoMP region. For example, the base station to which the main cell belongs determines uplink channel resources not overlapping with the uplink control channel resources or the uplink sounding reference signal resources that have been allocated for uplink communication in an main cell and the at least one other cell based on the information relating to the uplink control channel resources allocation or the uplink sounding reference signal resources allocation in the main cell and the at least one other cell. Next, in Step S108, the CoMP region is allocated. For example, the base station to which the main cell belongs allocates the determined uplink channel resources for uplink cooperative multi-point transmission/reception involving the main cell and the at least one other cell. The steps S104, S106 and S108 may adopt any one of the methods as shown in the first embodiment, the second embodiment and the third embodiment or a combination thereof. Next, in Step S110, the base station to which the main cell belongs transmits allocation information (i.e., CoMP region allocation information) of allocating the determined uplink channel resources for uplink cooperative multi-point transmission/reception involving the main cell and the at least one other cell to the user terminal. Finally, in step S112, the user terminal receives the allocation information transmitted by the base station to which the main cell belongs, and accesses to the main cell and the at least one other cell according to the allocation information.

### Eighth Embodiment

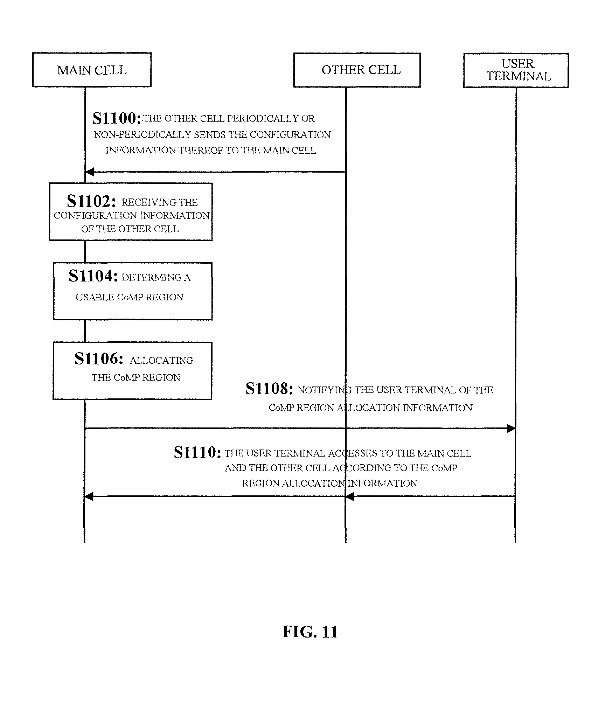

Hereinafter, an eighth embodiment of the present invention will be described in combination with FIG. 11. FIG. 11 shows a flow chart of a method for allocating uplink channel resources for cooperative multi-point transmission/reception according to the eighth embodiment of the present invention

The flow chart as shown in the eighth embodiment of the present invention is substantially the same as the flow chart as shown in the seventh embodiment of the present invention, and only differences therebetween will be described below. As shown in FIG. 11, in step S1100, the other cell periodically or non-periodically sends the resource configuration information thereof to the main cell on its own initiative. Subsequent steps S1102-S1110 are the same as steps S104-S112 as shown in the seventh embodiment of the present invention, and will not be repeatedly described herein.

### Ninth Embodiment

Hereinafter, a system for allocating uplink channel resources for cooperative multi-point transmission/reception according to a ninth embodiment of the present invention will be described. The system comprises a base station and a user terminal, wherein the base station comprises: a receiving means for receiving information relating to uplink control channel resources allocation or uplink sounding reference signal resources allocation in at least one other cell; a determining means for determining uplink channel resources not overlapping with the uplink control channel resources or the uplink sounding reference signal resources that have been allocated for uplink communication in the main cell and the at least one other cell based on the information relating to the uplink control channel resources allocation or the uplink sounding reference signal resources allocation in the main cell and the at least one other cell; and a transmitting means for transmitting allocation information of allocating the determined uplink channel resources for uplink cooperative multi-point transmission/reception involving the main cell and the at least one other cell to the user terminal; and the user terminal comprises: an allocation information receiving means for receiving the allocation information transmitted by the base station; and an accessing means for accessing to the main cell and the at least one other cell according to the allocation information.

The system according to the ninth embodiment of the present invention is a system corresponding to the method according to the seventh embodiment of the present invention, so it will not be repeatedly described in detail herein.

### Tenth Embodiment

Hereinafter, a user terminal 1200 according to the present invention will be described with reference to FIG. 12. FIG. 12 shows a schematic block diagram of a user terminal according to the present invention.

As shown in FIG. 12, the user terminal 1200 comprises an allocation information receiving means 1202 and an accessing means 1204. The allocation information receiving means 1204 can receive allocation information from a base station, the allocation information being generated by the base station and transmitted to the user terminal 1200. The allocation information for example is information of allocating the determined uplink channel resources for uplink cooperative multi-point transmission/reception involving the main cell and the at least one other cell (that is, is CoMP region allocation information). The accessing means 1204 accesses to the main cell and at least one other cell according to the received allocation information, wherein the base station comprises: a receiving means for receiving information relating to uplink control channel resources allocation or uplink sounding reference signal resources allocation in at least one other cell; a determining means for determining uplink channel resources not overlapping with the uplink control channel resources or the uplink sounding reference signal resources that have been allocated for uplink communication in the main cell and the at least one other cell based on the information relating to the uplink control channel resources allocation or the uplink sounding reference signal resources allocation in the main cell and the at least one other cell; and a transmitting means for transmitting allocation information of allocating the determined uplink channel resources for uplink cooperative multi-point transmission/reception involving the main cell and the at least one other cell to the user terminal.

### Eleventh Embodiment

Hereinafter, a method for allocating uplink channel resources for cooperative multi-point transmission/reception according to the eleventh embodiment of the present invention will be described. The method comprises: a user terminal receives allocation information from a base station; and the user terminal accesses to an main cell and at least one other cell according to the allocation information; wherein, the base station receives information relating to uplink control channel resources allocation or uplink sounding reference signal resources allocation in at least one other cell; the base station determines uplink channel resources not overlapping with the uplink control channel resources or the uplink sounding reference signal resources that have been allocated for uplink communication in the main cell and the at least one other cell based on the information relating to the uplink control channel resources allocation or the uplink sounding reference signal resources allocation in the main cell and the at least one other cell; and the base station transmits allocation information of allocating the determined uplink channel resources for uplink cooperative multi-point transmission/reception involving the main cell and the at least one other cell to the user terminal.

The method according to the eleventh embodiment of the present invention is a method corresponding to the user terminal according to the tenth embodiment of the present invention, so it will not be repeatedly described in detail herein.

Various variations and/or modifications can be carried out for the embodiments of the present invention. For example, in any one of the first to eighth embodiments, if a base station to which the main cell belongs is different from a base station to which the at least one other cell belongs, the at least one other cell sends information relating to uplink control channel resources allocation or uplink sounding reference signal resources allocation in the at least one other cell to the base station to which said main cell belongs through X2 interface. Those skilled in the art would appreciate that the information can also be sent using other interface standards.

Each block in the flow charts and/or block diagrams as well as any combination of the respective blocks in the flow charts and/or block diagrams can be achieved by computer program instructions. These computer program instructions can also be stored in a computer-readable medium that can instruct a computer or other programmable data processing means to operate in a particular manner. It should be appreciated that the flow charts and the block diagrams in the attached Drawings illustrate possibly achieved system architectures, functions and operations of the system, the method and the computer program product according to various embodiments of the present invention. In this regard, each block in the flow charts or the block diagrams can represent a module, a program segment, or a portion of a code, wherein the module, the program segment, or the portion of the code includes one or more executable insturcitons for achieving prescribed logic functions. It should also be appreciated that, in some alternative embodiments, the functions marked in the blocks can also occur in an order different from that marked in the attached Drawings. For example, two successively represented blocks actually can be executed substantially in parallel, and sometimes they can also be executed in an opposite order, which depends on involved functions. It should also be appreciated that, each block in the flow charts and/or block diagrams as well as combinations of the blocks in the flow charts and/or block diagrams can be achieved by a dedicated hardware-based system for performing prescribed functions or operations, or can be achieved by a combination of dedicated hardware and computer instructions.

For those ordinarily skilled in the art, it is apparent that various modifications and variations can be carried out without departing from the scope and spirit of the present invention. Selections and descriptions for the embodiments aim to better explain the principle and actual application of the present invention, so as to enable those ordinarily skilled in the art to appreciate that the present invention may have various embodiments having various alterations which are suitable for intended specific purposes.

## Claims

1. A method for allocating uplink channel resources for cooperative multi-point transmission/reception in a base station, comprising:
receiving information relating to uplink control channel resources allocation or uplink sounding reference signal resources allocation in at least one other cell;
determining uplink channel resources not overlapping with the uplink control channel resources or the uplink sounding reference signal resources that have been allocated for uplink communication in an main cell and said at least one other cell based on the information relating to the uplink control channel resources allocation or the uplink sounding reference signal resources allocation in said main cell and said at least one other cell; and
allocating the determined uplink channel resources for uplink cooperative multi-point transmission/reception involving said main cell and said at least one other cell.

2. The method according to claim 1, wherein the information relating to the uplink control channel resources allocation in said main cell and said at least one other cell is the number of resource blocks allocated to uplink control channel in a subframe of said main cell and said at least one other cell, the uplink control channel resources that have been allocated for uplink communication in said main cell and said at least one other cell are resource blocks allocated to said uplink control channel in said subframe, and said determining step comprises:
calculating a maximum number of resource blocks allocated to the uplink control channel in said subframe of said main cell and said at least one other cell; and
determining other resource blocks except for the first maximum number of resource blocks and the last maximum number of resource blocks in said subframe as said uplink channel resources not overlapping.

3. The method according to claim 1 or 2, wherein the information relating to the uplink sounding reference signal resources allocation in said main cell and said at least one other cell are sounding reference signal configuration parameters of said main cell and said at least one other cell, uplink sounding reference signal resources that have been allocated for uplink communication in said main cell and said at least one other cell are symbols for bearing sounding reference signal in subframes, and said determining step comprises:
determining subframes for carrying sounding reference signal and symbols for bearing sounding reference signal therein based on the sounding reference signal configuration parameters of said main cell and said at least one other cell; and
determining other subframes except for the subframes for carrying sounding reference signal, and other symbols except for the symbols for bearing sounding reference signal in the subframes for carrying sounding reference signal as said uplink channel resources not overlapping.

4. The method according to claim 3, wherein said sounding reference signal configuration parameters are sounding reference signal period and/or sounding reference signal bandwidth.

5. The method according to any of claims 1-4, wherein if a base station to which said main cell belongs is different from a base station to which said at least one other cell belongs, said at least one other cell sends information relating to the uplink control channel resources allocation or the uplink sounding reference signal resources allocation in said at least one other cell to said base station to which said main cell belongs through X2 interface.

6. An apparatus for allocating uplink channel resources for cooperative multi-point transmission/reception in a base station, comprising:
a receiving means for receiving information relating to uplink control channel resources allocation or uplink sounding reference signal resources allocation in at least one other cell;
a determining means for determining uplink channel resources not overlapping with the uplink control channel resources or the uplink sounding reference signal resources that have been allocated for uplink communication in said main cell and said at least one other cell based on the information relating to the uplink control channel resources allocation or the uplink sounding reference signal resources allocation in said main cell and said at least one other cell; and
an allocating means for allocating the determined uplink channel resources for uplink cooperative multi-point transmission/reception involving said main cell and said at least one other cell.

7. The apparatus according to claim 6, wherein the information relating to the uplink control channel resources allocation in said main cell and said at least one other cell are the number of resource blocks allocated to uplink control channel in a subframe of said main cell and said at least one other cell, the uplink control channel resources that have been allocated for uplink communication in said main cell and said at least one other cell are resource blocks allocated to said uplink control channel in said subframe, and said determining means comprises:
a resource block calculating means for calculating a maximum number of resource blocks allocated to the uplink control channel in said subframe of said main cell and said at least one other cell; and
a resource block selecting means for determining other resource blocks except for the first maximum number of resource blocks and the last maximum number of resource blocks in said subframe as said uplink channel resources not overlapping.

8. The apparatus according to claim 6, wherein the information relating to the uplink sounding reference signal resources allocation in said main cell and said at least one other cell are sounding reference signal configuration parameters of said main cell and said at least one other cell, uplink sounding reference signal resources that have been allocated for uplink communication in said main cell and said at least one other cell are symbols for bearing sounding reference signal in said subframe, and said determining means comprises:
a sounding reference signal calculating means for determining subframes for carrying sounding reference signal and symbols for bearing sounding reference signal therein based on the sounding reference signal configuration parameters of said main cell and said at least one other cell; and
a sounding reference signal selecting means for determining other subframes except for the subframes for carrying sounding reference signal, and other symbols except for the symbols for bearing sounding reference signal in the subframes for carrying sounding reference signal as said uplink channel resources not overlapping.

9. The apparatus according to claim 8, wherein said sounding reference signal configuration parameters are sounding reference signal period and/or sounding reference signal bandwidth.

10. The apparatus according to any of claims 6-9, wherein if a base station to which said main cell belongs is different from a base station to which said at least one other cell belongs, said at least one other cell sends information relating to uplink control channel resources allocation or uplink sounding reference signal resources allocation in said at least one other cell to said base station to which said main cell belongs through X2 interface.

11. A computer storage medium comprising computer readable instruction, wherein said computer readable instruction is used to execute steps in the method according to any of claims 1-5.

12. A program product storing machine readable instruction codes, wherein the instruction codes can perform the method according to any one of claims 1-5 when they are read and executed by the machine.

13. A method for allocating uplink channel resources for cooperative multi-point transmission/reception, comprising:
a base station receives information relating to uplink control channel resources allocation or uplink sounding reference signal resources allocation in at least one other cell;
said base station determines uplink channel resources not overlapping with the uplink control channel resources or the uplink sounding reference signal resources that have been allocated for uplink communication in an main cell and said at least one other cell based on the information relating to the uplink control channel resources allocation or the uplink sounding reference signal resources allocation in said main cell and said at least one other cell;
said base station transmits allocation information of allocating the determined uplink channel resources for uplink cooperative multi-point transmission/reception involving said main cell and said at least one other cell to said user terminal;
said user terminal receives said allocation information transmitted by said base station; and
said user terminal accesses to said main cell and said at least one other cell according to said allocation information.

14. A system for allocating uplink channel resources for cooperative multi-point transmission/reception, comprising a base station and a user terminal, wherein,
said base station comprises:
a receiving means for receiving information relating to uplink control channel resources allocation or uplink sounding reference signal resources allocation in at least one other cell;
a determining means for determining uplink channel resources not overlapping with the uplink control channel resources or the uplink sounding reference signal resources that have been allocated for uplink communication in an main cell and said at least one other cell based on the information relating to the uplink control channel resources allocation or the uplink sounding reference signal resources allocation in said main cell and said at least one other cell; and
a transmitting means for transmitting allocation information of allocating the determined uplink channel resources for uplink cooperative multi-point transmission/reception involving said main cell and said at least one other cell to said user terminal;
said user terminal comprises:
an allocation information receiving means for receiving said allocation information transmitted by said base station; and
an accessing means for accessing to said main cell and said at least one other cell according to said allocation information.

15. A method for allocating uplink channel resources for cooperative multi-point transmission/reception, comprising:
a user terminal receives allocation information from a base station; and
said user terminal accesses to an main cell and at least one other cell according to said allocation information;
wherein,
said base station receives information relating to uplink control channel resources allocation or uplink sounding reference signal resources allocation in the at least one other cell;
said base station determines uplink channel resources not overlapping with the uplink control channel resources or the uplink sounding reference signal resources that have been allocated for uplink communication in said main cell and said at least one other cell based on the information relating to the uplink control channel resources allocation or the uplink sounding reference signal resources allocation in said main cell and said at least one other cell; and
said base station transmits allocation information of allocating the determined uplink channel resources for uplink cooperative multi-point transmission/reception involving said main cell and said at least one other cell to said user terminal.

16. A user terminal for allocating uplink channel resources for cooperative multi-point transmission/reception, comprising:
an allocation information receiving means for receiving allocation information transmitted by a base station; and
an accessing means for accessing to an main cell and at least one other cell according to said allocation information;
wherein, said base station comprises:
a receiving means for receiving information relating to uplink control channel resources allocation or uplink sounding reference signal resources allocation in at least one other cell;
a determining means for determining uplink channel resources not overlapping with the uplink control channel resources or the uplink sounding reference signal resources that have been allocated for uplink communication in said main cell and said at least one other cell based on the information relating to the uplink control channel resources allocation or the uplink sounding reference signal resources allocation in said main cell and said at least one other cell; and
a transmitting means for transmitting allocation information of allocating the determined uplink channel resources for uplink cooperative multi-point transmission/reception involving said main cell and said at least one other cell to said user terminal.
